# EUROPEAN PATENT SPECIFICATION

(11) **EP 2 511 163 B1**
(45) Date of publication and mention of the grant of the patent: **09.11.2016**
(21) Application number: 10835743.5
(22) Date of filing: 10.08.2010
(51) Int. Cl.: B62D 55/00, B62D 55/12

(54) **CRAWLER TRAVELING DEVICE**
RAUPENARTIGES FAHRGERÄT
DISPOSITIF MOBILE À CHENILLE

(30) Priority: 10.12.2009 JP 2009280368
(43) Date of publication of application: 17.10.2012
(73) Proprietor: Bridgestone Corporation, Tokyo 104-8340 (JP); Kubota Corporation, Osaka 556-8601 (JP)
(72) Inventor: ABIKO, Yutaka, Yokohama-shi Kanagawa 244-8510 (JP); ISHIHARA, Kazuma, Sakai-shi Osaka 590-0823 (JP); INAOKA, Motonari, Sakai-shi Osaka 590-0823 (JP); KOBAYASHI, Takashi, Sakai-shi Osaka 590-0823 (JP); FUJINO, Setsuo, Sakai-shi Osaka 590-0823 (JP)
(74) Representative: Intès, Didier Gérard André
(86) International application number: PCT/JP2010/063565
(87) International publication number: WO 2011/070821

(56) References cited:
- EP-A1- 1 273 504
- EP-A1- 1 640 254
- EP-A1- 2 055 616
- WO-A1-2008/023820
- JP-A- 6 107 251
- JP-A- 63 008 079
- JP-A- 2000 118 450
- JP-A- 2003 011 860
- JP-A- 2009 061 829
- US-A- 3 472 563

## Description

### TECHNICAL FIELD OF THE INVENTION

The present invention relates to a crawler propelling device comprising:
a crawler belt, the crawler belt including a belt main body made of rubber material, cored bars embedded in the belt main body at predetermined intervals in a belt circumferential direction, and a pair of right and left cored bar projections protruding from intermediate portions in a belt width direction of each of the cored bars; and
a driving sprocket for providing the crawler belt with rotational power in the belt circumferential direction.

### BACKGROUND OF THE INVENTION

In a known crawler propelling device of the above-noted type, an engaging recess elongated greater in the belt width direction than in the belt circumferential direction is provided in the belt main body made of rubber between the cored bars embedded in the belt main body at predetermined intervals in the belt circumferential direction. A driving claw elongated in the same direction as the longitudinal direction of the engaging recess is provided in the driving sprocket for driving the crawler belt. A contacting area at an engaging portion between the driving claw and the engaging recess is increased to transmit a great driving force of the driving claw to the rubber belt main body of the crawler belt (see Patent Document 1).

### PRIOR ART LIST

### PATENT DOCUMENT(S)

[Patent Document 1] JP 2009-078796 A or Japanese Unexamined Patent Application Publication No. 2009-078796 (see paragraphs 0031 and 0041; and Figs. 1, 2, 3, 5 and 6). EP 1 273 504 discloses an elastic crawler traveling apparatus and sprocket for crawler belt used in the same while EP 1 640 254 discloses a rubber track and method of producing core metal for rubber track.

Document EP 1 640 254 could be taken as basis for the preamble features of claims 1 and

The above-noted crawler propelling device uses the engaging recess formed in the belt main body of the crawler belt and the driving sprocket provided with the driving claw elongated in the same direction as the longitudinal direction of the engaging recess, thereby to provide a large contacting area between the driving claw and the engaging recess. Such an arrangement, however, has the following disadvantages.

More particularly, the construction for allowing the engaging recess formed in the belt main body to engage with the driving claw elongated in the same direction as the longitudinal direction of the engaging recess for power transmission does not have any function for restricting positional displacement between the crawler belt and the driving sprocket in the belt width direction.

Thus, when the road is slanted in a lateral direction in a traveling direction of the vehicle, the positional displacement occurs between the crawler belt and the driving sprocket in the belt width direction, which might cause a situation in which the engaging recess formed in the belt main body and the driving claw are not satisfactorily engaged with each other.

In order to avoid such a situation, it is suggested that the engaging recess have a dimension in the belt width direction that is sufficiently greater than the lateral width of the driving claw for easy engagement therebetween, for example. However, if the engaging recess has the increased dimension in the belt width direction, the position in the engaging recess with which the driving claw is engaged in the belt width direction is not stable, which causes disadvantages that the driving claw eventually goes too far to one side of the engaging recess to be easily disengaged or the strength of the crawler belt is abated owing to the presence of the engaging recess that is uselessly elongated.

### SUMMARY OF INVENTION

### PROBLEM(S) TO BE SOLVED BY THE INVENTION

The main object of the present invention is to provide a crawler propelling device for allowing an engaging recess of a crawler belt to be easily engageable with a driving claw of a driving sprocket and capable of preventing positional displacement between the crawler belt and the driving sprocket in a belt width direction.

### MEANS FOR SOLVING THE PROBLEM(S)

In order to achieve the above-noted object, the crawler propelling device suggested by the present invention has the following characteristic features in construction as well as functions and effects, namely:-
A crawler propelling device comprising:
   a crawler belt, the crawler belt including a belt main body made of rubber material, cored bars embedded in the belt main body at predetermined intervals in a belt circumferential direction, and a pair of right and left cored bar projections protruding from intermediate portions in a belt width direction of each of the cored bars; and
   a driving sprocket for providing the crawler belt with rotational power in the belt circumferential direction,
   wherein the crawler belt has engaging recesses provided on an inner circumferential surface thereof to be engageable with driving claws of the driving sprocket,
   wherein each of the engaging recesses is positioned between the cored bars in the belt circumferential direction, the engaging recess being elongated greater in the belt width direction than in the belt circumferential direction, the engaging recess having end faces in the belt width direction formed as tapered surfaces to be narrower toward an inner depth side of the engaging recess,
   wherein each of the driving claws of the driving sprocket is elongated greater in a lateral direction than in a circumferential direction of a disk-shaped member, and
   wherein the driving claws are formed on an outer circumferential side of the disk-shaped member, which side is fitted into a space between the right and left cored bar projections, to be engaged into the engaging recesses formed at predetermined intervals in the belt circumferential direction, and wherein each of the driving claws has end faces in the lateral direction formed as tapered surfaces to be narrower radially outward.

With the above-noted arrangement, the contacting surface between the engaging recess and the driving claw in the engaged state is elongated in the belt width direction, which increases the contacting area to allow the crawler belt to be driven with a great driving force while maintaining relatively low contact pressure in the contacting surface.

Further, even if the length of the engaging recess in the belt width direction and the length of the driving claw in the lateral direction are the same, when the engaging recess and the driving claw start to engage with each other, a narrowed portion of a distal end of the driving claw is located at a widened portion of an entrance side of the engaging recess. Thus, there is a relatively large difference between the engaging recess and the driving claw in dimension in the same direction at the position where they start to engage with each other, which allows them to engage with each other easily. In an engagement completed state in which the driving claw is completely engaged into the engaging recess, the difference between the engaging recess and the driving claw in dimension in the same direction is smaller than at the point when they start to engage with each other, which allows stable power transmission while the positional displacement between the engaging recess and the driving claw in the same direction is restrained. Further, since there is no need to excessively make the length of the engaging recess in the belt width direction greater than the length of the driving claw in the same direction, abating the strength of the crawler belt can be avoided.

In addition, when the engaging recess and the driving claw start to engage with each other in the state in which the central position of the engaging recess in the belt width direction is positionally displaced from the central position of the driving claw in the lateral direction, the end faces of the engaging recess in the belt width direction and the end faces of the driving claw in the lateral direction are guided by the tapered surfaces to allow their central positions to be moved closer to each other and deeply engaged with each other, which advantageously makes them easily engage with each other as predetermined.

A first embodiment of the present invention is a crawler propelling device as defined by claim 1. In this crawler propelling device, each of the tapered surfaces forming the end face of the engaging recess in the belt width direction has an angle of inclination relative to a horizontal plane that is the same as an angle of ) inclination relative to the horizontal plane of each of the tapered surfaces forming the end face of the driving claw in the lateral direction.

With the above-noted arrangement, when the end faces of the engaging recess in the belt width direction come into contact with the end faces of the driving claw in the lateral direction, their tapered surfaces having the same angle of inclination contact with each other entirely with the entire contact pressure in the contacting portions being generally uniform. Thus, it is possible to secure as large an area as possible in the contacting portions on the end faces and provide generally uniform contact pressure, thereby to achieve relatively low contact pressure in those locations. As a result, when a load is applied in the lateral direction from the driving claw on a slanting ground or the like to one of the end faces of the engaging recess opposing the driving claw, the contact pressure can be maintained at as low a level as possible to advantageously avoid or reduce wear and flaw of the crawler belt in the contacting portions.

A second embodiment of the present invention is a crawler propelling device as defined by claim 2,

In this crawler propelling device, the disk-shaped member of the driving sprocket has a width in the lateral direction on the outer circumferential portion fitted into a space defined between the right and left cored bar projections, the width being smaller than a gap defined between inner-end faces of the right and left cored bar projections, and
the relative lateral position between the end face of the disk-shaped member in the lateral direction and the driving claw is determined to allow the end face of the driving claw in the lateral direction to come into contact with the end face of the engaging recess and then allow the end face of the disk-shaped member in the lateral direction to come into contact with the inner-end face of the cored bar projection.

With the above-noted arrangement, the positional displacement of the crawler belt in the belt width direction relative to the driving sprocket can be restrained not only by contact between the end face of the engaging recess of the crawler belt in the belt width direction and the end face of the driving claw of the driving sprocket in the lateral direction, but also by contact between the inner face of the cored bar projection of the crawler belt and the end face of the disk-shaped member in the lateral direction. Thus, the positional displacement of the crawler belt in the belt width direction can be restrained more reliably than in the case where the positional displacement of the crawler belt in the belt width direction is restrained only by the contact between the end face of the engaging recess of the crawler belt in the belt width direction and the end face of the driving claw of the driving sprocket in the lateral direction.

When the positional displacement of the crawler belt in the belt width direction relative to the driving sprocket occurs, the end face of the driving claw in the lateral direction comes into contact with the end face of the engaging recess of the crawler belt first, which causes the end face of the engaging recess to be compressed and elastically deformed, and then the end face of the disk-shaped member in the lateral direction comes into contact with the inner-end face of the cored bar projection. With such an arrangement for achieving the phased contact, the level of noise can be advantageously diminished, compared with the arrangement in which the end face of the disk-shaped member made of metal comes into direct contact with the inner-end face of the cored bar projection without elastic deformation of the engaging recess.

Further, the cored bar projection of the crawler belt comes into contact with the end face of the disk-shaped member in the lateral direction to prevent farther relative movement between the crawler belt and the driving sprocket thereby to regulate relative movement between the engaging recess and the driving claw as well, which removes a pressing force applied from the driving claw to a direction to elastically deform the engaging recess. Thus, the engaging recess contacting the end face of the driving claw to be elastically deformed is not compressively deformed any farther, as a result of which the degree of wear and tear in the engaging recess can be advantageously diminished.

In addition, a crawler propelling device may further include all the features of the first and the second embodiments of the present invention.

In a further preferred embodiment of the first and/or second embodiments of the present invention:
the crawler propelling device further comprises:
   a plurality of rollers arranged in line forwardly and rearwardly in the belt circumferential direction for coming into contact with the inner circumferential surface of the crawler belt; and
   idler wheels mounted forwardly and rearwardly of the plurality of rollers,
wherein the driving sprocket is mounted above the rollers at a fore/aft intermediate position between the foremost idler wheel and the rearmost idler wheel.

The crawler propelling device that is constructed as above can be adapted to a so-called "semi-crawler type" crawler propelling device, in which the driving sprocket is mounted at the fore/aft intermediate position between the foremost and rearmost idler wheels, and above the rollers.

### BRIEF DESCRIPTION OF THE DRAWING(S)

Fig. 1 is an overall side view of a tractor;
Fig. 2 is an overall side view of a crawler propelling device;
Fig. 3 is a top plan view of the crawler propelling device;
Fig. 4 is a sectional view taken on line IV-IV in Fig. 3;
Fig. 5 is a partial sectional view of a crawler belt in a belt circumferential direction;
Fig. 6 is a schematic perspective view of cored bar projections;
Fig. 7 is a perspective view showing part of a driving sprocket;
Fig. 8 is a side view showing an outer circumferential part of the driving sprocket;
Fig. 9 is a sectional view taken on line IX-IX in Fig. 8;
Fig. 10 is view from a direction of an arrow in Fig. 8;
Fig. 11 is an illustrative view showing relationships among a driving claw, an engaging recess and the cored bar projections;
Fig. 12 shows a retainer guide, in which Fig. 12(a) is a top plan view of the retainer guide, Fig. 12(b) is a side view of the retainer guide; and Fig. 12(c) is a front view of the retainer guide;
Fig. 13 is an illustrative view showing relationships between the crawler belt and a component associated therewith, in which Fig. 13(a) shows a relationship between the crawler belt and the driving sprocket; Fig. 13(b) shows a relationship between the crawler belt and an idler wheel; and Fig. 13(c) shows a relationship between the crawler belt and the retainer guide;
Fig. 14 is an illustrative view showing a close contact regulation state between the retainer guide and the cored bar projections, in which Fig. 14(a) shows a reference position and Fig. 14(b) shows the closest position between the retainer guide and the cored bar projections;
Fig. 15 is an illustrative view showing a contacting state between the idler wheel and the crawler belt; and
Fig. 16 is an illustrative view showing a relationship among the driving claw, engaging recess and cored bar projections.

### EMBODIMENT(S) OF THE INVENTION

An embodiment of the present invention will be described hereinafter in reference to the accompanying drawings.

### [Overall Construction of Tractor]

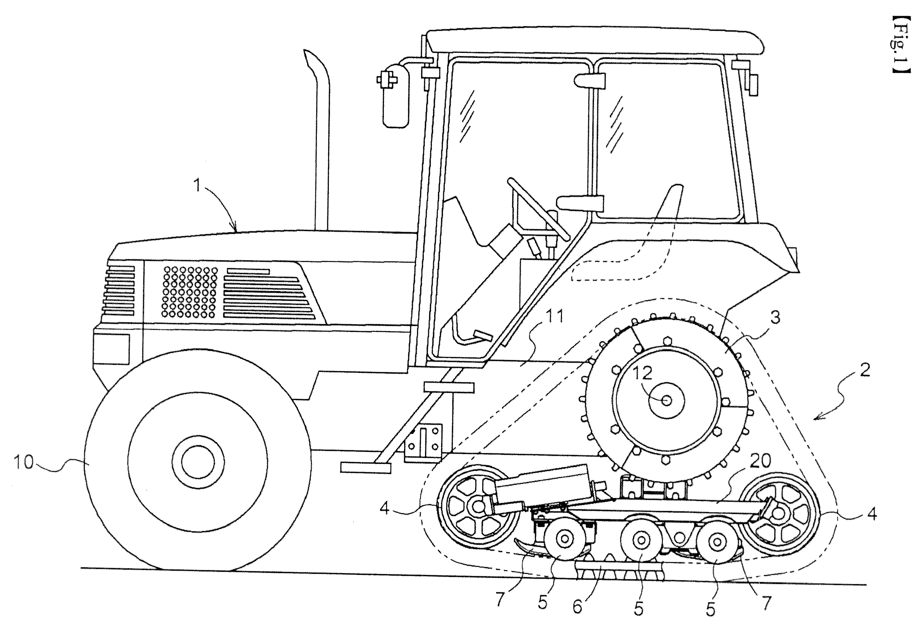

Fig. 1 shows a semi-crawler type tractor including a crawler propelling device 2 mounted rearwardly of the tractor. The semi-crawler type tractor is a tractor with its specifications being changed from those of a four-wheel drive tractor, and includes a pair of right and left steerable front wheels 10 mounted forwardly of a tractor vehicle body 1 with a cabin, and a pair of right and left crawler propelling devices 2 acting as a main propelling device mounted rearwardly of the tractor. Further, to a rear portion of the vehicle body is connected a tiller, harvester or work implement for performing various intermediate control operations through an unillustrated three-point link mechanism.

### [Crawler Propelling Device]

As shown in Figs. I and 2, each crawler propelling device 2 is provided with a large-diameter driving sprocket 3 connected to a rear axle 12 mounted on a rear transmission case 11 for driving the rear wheels.

A crawler belt 6 is tensionally wound around the driving sprocket 3, idler wheels 4 mounted forwardly and rearwardly of a track frame 20 and a plurality of rollers 5 arranged in line in a longitudinal direction of the track frame 20 to allow the driving sprocket 3 to be positioned in an intermediate position between the front and rear idler wheels 4 above the rollers 5.

A tread of the crawler propelling device 2 in a lateral direction is determined to be substantially the same as a tread of the front wheel 10 in order to travel between ridges in a field.

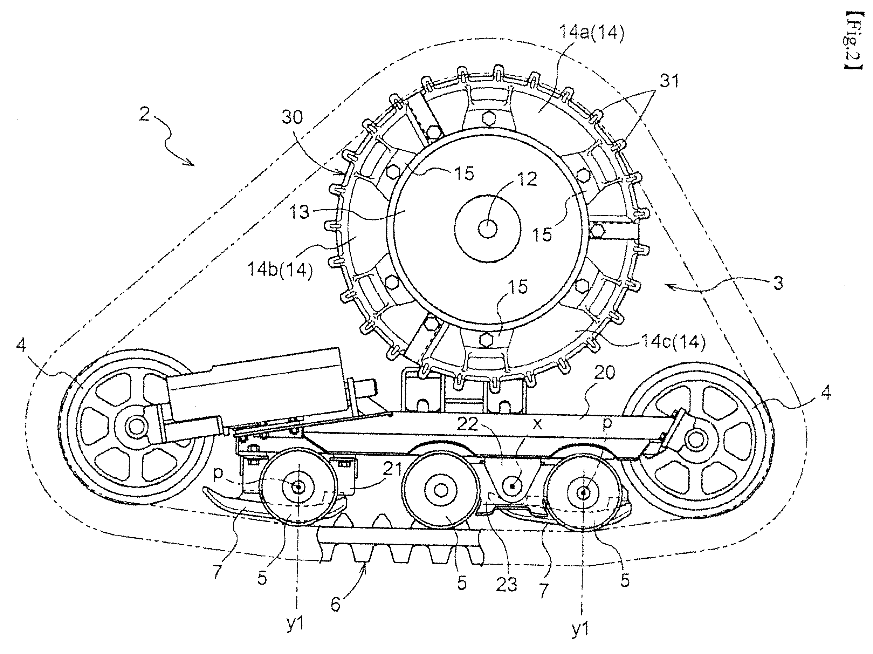

As shown in Fig. 2, three rollers 5 are arranged in a fore-and-aft direction. The front-end roller 5 is positionally fixed to the track frame 20 through a fixing bracket 21.

The two rear-side rollers 5 are distributed to opposite end sides of a balance-like member 23 vertically pivotable about a laterally oriented axis x at an intermediate portion thereof to be oscillatable like a seesaw.

Retainer guides 7 are provided in forward and rearward two positions for allowing each of the rollers 5 and the crawler belt 6 to maintain the fixed positional relationship and preventing each roller 5 from disengaging from the crawler belt 6.

The front-side retainer guide 7 is disposed continuously from a lower end of the fixing bracket 21 for fixedly supporting the front-end roller 5, while the rear-side retainer guide 7 is disposed continuously from a lower end of the balance-like member 23 to extend fore and aft across the rear-end roller 5.

### [Crawler Belt]

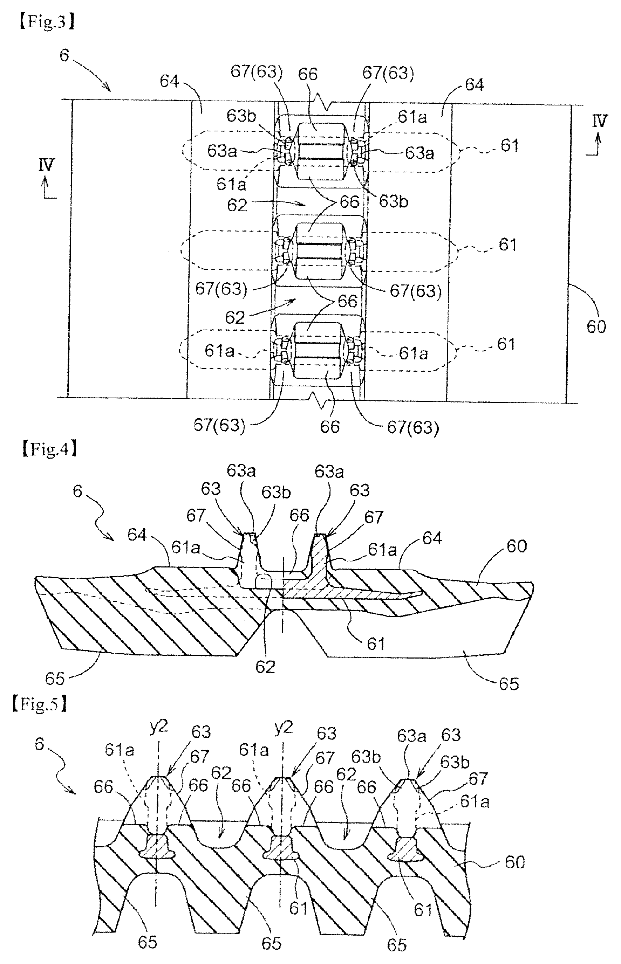

The crawler belt 6 has a construction as shown in Figs. 3 to 6.

In particular, the crawler belt 6 includes a belt main body 60 made of rubber material and formed as an endless belt, cored bars 61 embedded in the belt main body 60 at predetermined intervals in a belt circumferential direction, and engaging recesses 62 formed between the cored bars 61 on an inner circumferential surface of the belt for receiving driving claws 31 of the driving sprocket 3 and transmitting drive power to the crawler belt 6.

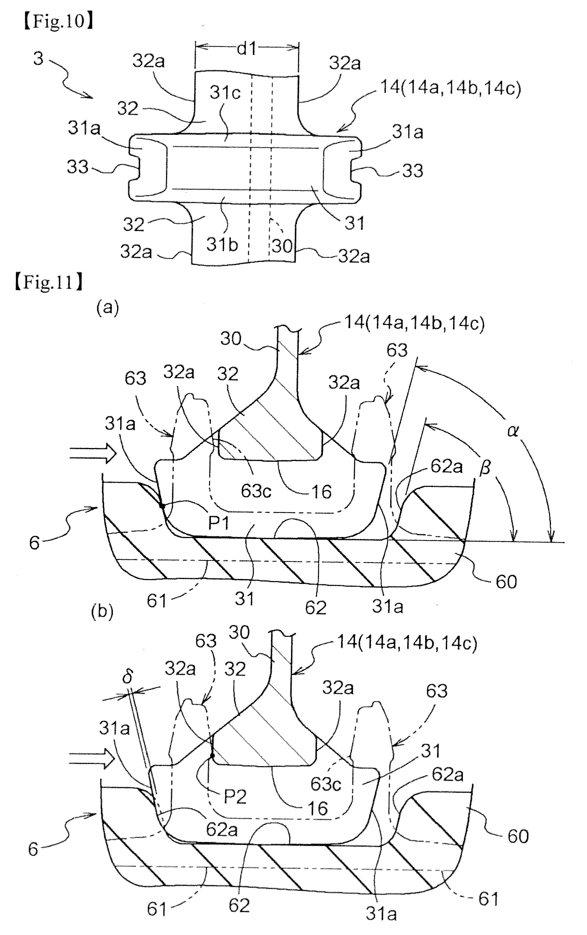

As shown in Figs. 5 and 11, each engaging recess 62 is positioned between the cored bars 61 in the belt circumferential direction and elongated greater in a belt width direction than in the belt circumferential direction. As shown in Fig. 11(a), the engaging recess 62 has end faces 62a formed at lateral opposite ends thereof in reference to the belt width direction. With the crawler belt 6 being positioned on a horizontal plane, each of the end faces 62a is formed as an inclined surface having a predetermine belt inclination angle (β) (corresponding to an angle of inclination relative to the horizontal plane), not as a vertical surface normal to the horizontal plane.

As described above, the engaging recess 62 has the end faces 62a formed at the lateral opposite ends thereof in the belt width direction, so that each end face 62a defines the inclined surface with the belt inclination angle (β). Whereby, the lateral opposite end faces 62a of the engaging recess 62 are formed as tapered surfaces to be narrower toward an inner depth side (lower side in Fig. 11 (a)) of the engaging recess 62.

Each cored bar 61 has a pair of right and left cored bar projections 63 each protruded from an intermediate portion in the belt width direction toward the inner circumferential surface of the belt for guiding the rollers. The driving sprocket 3 and the front and rear idler wheels 4 run between the cored bar projections 63.

Further, on the inner circumferential surface of the belt main body 60 positioned in a lateral outer portion of each cored bar projection 63 is formed a flat roller track surface 64 on which the rollers 5 make rolling movement. A propelling lag 65 having a thickness greater than that of the belt main body 60 excluding the portion of the cored bar projection 63 is integrally formed with and projects from an outer circumferential surface of the belt main body 60 at a position corresponding to the engaging recess 62 inside and outside the belt.

A pressure-receiving block portion 66 is provided on the inner circumferential surface of the belt main body 60 between the cored bar 61 and the engaging recess 62 for transmitting, to the cored bar 61, drive power from the driving claw 31 of the driving sprocket 3 engaged into the engaging recess 62. More particularly, the pressure-receiving block portion 66 made of rubber is configured to transmit drive power to the cored bar 61 made of metal, while receiving compressive action from the driving claw 31 which is made of metal and engaged into the engaging recess 62. As a result, direct contact can be prevented between the metal materials of the driving claw 31 and the cored bar 61 to avoid occurrence of noise.

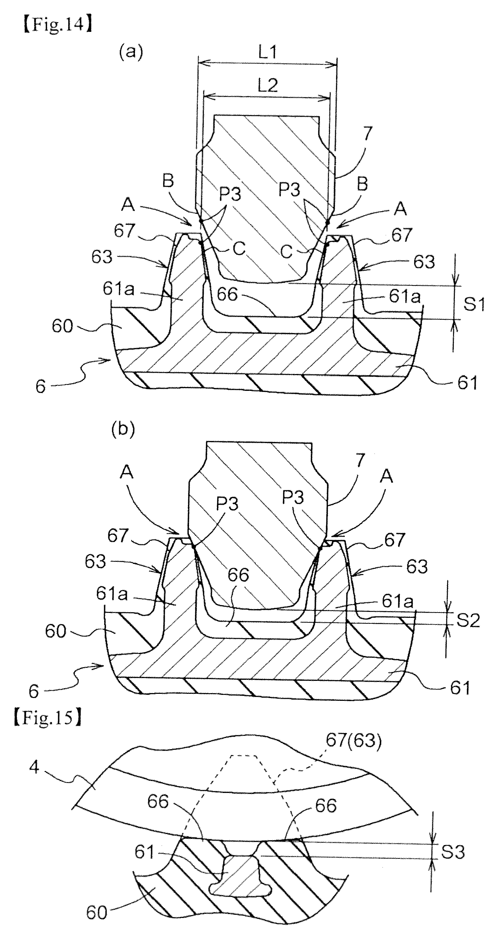

Further, as shown in Fig. 15, the pressure-receiving block portion 66 is projected toward the inner circumferential surface of the belt from the inner circumferential surface of the cored bar 61 so that a predetermined gap (S3) is formed between the outer circumferential surface of the idler wheel 4 and the inner circumferential surface of the cored bar 61 when the idler wheel 4 comes into contact with the inner circumferential surface of the pressure-receiving block portion 66, to avoid direct contact between the idler wheel 4 and the cored bar 61.

As shown in Figs. 4 to 6, a projecting portion 61a made of metal is integrally formed with part of the cored bar projection 63 and projects toward the inner circumferential surface of the belt. The cored bar projection 63 has a general mountain-shaped outer configuration by covering the projecting portion 61a with a mountain-shaped projection 67 made of rubber forming the belt main body 60.

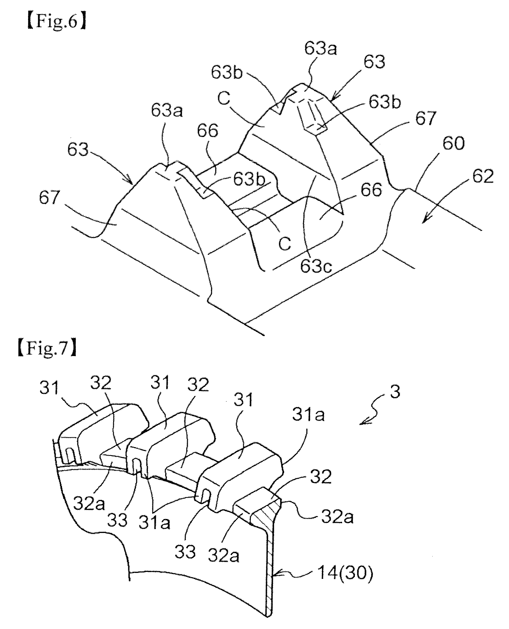

More particularly, the cored bar projection 63 has the mountain shape in cross section both in the belt width direction as shown in Fig. 4 and in the belt circumferential direction as shown in Fig. 5. Further, as shown in Fig. 6, the cored bar projection 63 has a surface directed inward in the belt width direction formed as an inclined surface acting as a guide surface (C) relative to the idler wheel 4 and the retainer guide 7.

In addition, the mountain-shaped cored bar projection 63 has a crest 63a forming a T shape as viewed from the top with lines extending along the belt circumferential direction and inwardly directed lines extending perpendicularly to the lines extending along the circumferential direction. A concave portion 63b is provided at a portion of the guide surface (C) of the mountain-shaped projection 67 positioned inwardly of the belt width direction in the vicinity of the crest 63a.

### [Driving Sprocket]

The driving sprocket 3 has a construction as shown in Figs. 2 and 7 to 11.

More particularly, the driving sprocket 3 includes a large-diameter disk-shaped member 30 connected to the rear axle 12, and the driving claws 31 projecting radially outward from an outer rim of the disk-shaped member 30.

The disk-shaped member 30 is formed from a hub disk 13 fixed to the rear axle 12 acting as a drive shaft, and a ring-shaped outer circumferential member 14 (corresponding to an outer circumferential portion of the disk-shaped member 30) that is connected by bolts to an outer circumferential side of the hub disk 13. The outer circumferential member 14 is trisected in the circumferential direction to provide a combination of divided segmental members 14a, 14b and 14c formed as partial arcs.

As shown in Figs. 7 to 10, the outer circumferential member 14 has a greater thickness in the vicinity of an outer circumferential rim 16 located radially outward than in the vicinity of a mounting portion 15 relative to the hub disk 13 located radially inward. The vicinity of the outer circumferential rim 16 acts as an annular rib portion 32.

The driving claw 31 is integrally formed with and projected radially outward from the outer circumferential rim 16 of the outer circumferential member 14 and projected laterally outward from the rib portion 32.

The rib portion 32 has a lateral thickness (d1) that is smaller than a gap between the laterally opposed right/left cored bar projections 63 of the crawler belt 6 and is determined as follows in correlation with the cored bar projection 63 and the driving claw 31.

As shown in Fig. 11(a), a lateral end face 31a of the driving claw 31 comes into contact with the end face 62a of the engaging recess 62 first. Thereafter, the end face 62a of the engaging recess 62 receives a pressing force from the driving claw 31 to be deformed by a certain amount of compression (δ) as shown in Fig. 11(b). Then, an edge 32a of the rib portion 32 comes into contact with an inner-end face 63c of the cored bar projection 63.

In this manner, the relative lateral position between the lateral edge 32a of the rib portion 32 and the driving claw 31 is determined so that, after the lateral end face 31a of the driving claw 31 comes into contact with the end face 62a of the engaging recess 62 to be elastically deformed by the certain amount, the lateral edge 32a of the rib portion 32, which corresponds to an end face of the disk-shaped member 30, comes into contact with the inner-end face 63c of the cored bar projection 63.

More particularly, with reference to Fig. 11(a), it is assumed for the sake of convenience that a contacting point (P1) is located at a point of contact between part of the lateral end face 31 of the driving claw 31 and the end face 62a of the engaging recess 62. From the time of the contact at the contacting point (P1), there occurs a time lag until the edge 32a of the rib portion 32 comes into contact with the inner-end face 63c of the cored bar projection 63 at a contacting portion (P2) as shown in Fig. 11(b). To provide such a time lag, the relative lateral position between the lateral end face 31a of the driving claw 31 and the lateral edge 32a of the rib portion 32 is determined.

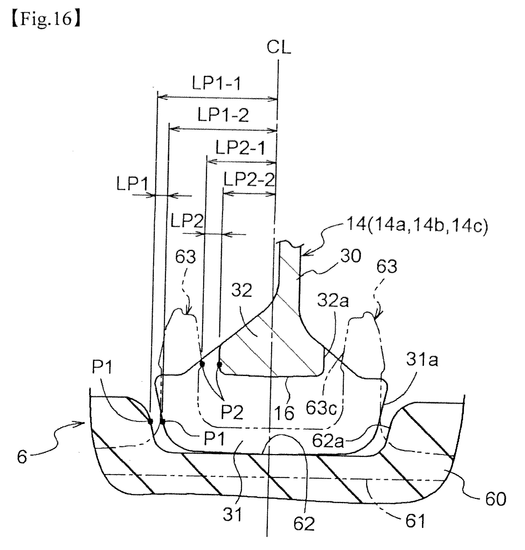

The above positional relationship can be described as follows with reference to Fig. 16.

When a lateral central position of the driving claw 31 is positioned on a center line (CL) of the engaging recess 62 in the belt width direction, the lateral end face 31a of the driving claw 31 has not yet come into contact with the end face 62a of the engaging recess 62 at the contacting portion (P1); and the edge 32a of the rib portion 32 has not yet come into contact with the inner-end face 63c of the cored bar projection 63 at the contacting portion (P2), either.

With the above-noted un-contacted state, there is a first gap (LP1) defined between a distance (LP1-1) (distance from the center line (CL) to the contacting portion (P1) on the end face 62a of the engaging recess 62) and a distance (LP1-2) (distance from the center line (CL) to the contacting portion (P1) on the lateral end face 31 a of the driving claw 31).

On the other hand, there is a second gap (LP2) defined between a distance (LP2-1) (distance from the center line (CL) to the contacting portion (P2) on the inner-end face 63c of the cored bar projection 63) and a distance (LP2-2) (distance from the center line (CL) to the contacting portion (P2) on the edge 32a of the rib portion 32).

The second gap (LP2) is determined to be larger than the first gap (LP1) by an amount corresponding to the amount of compression (δ) that is provided when the end face 62a of the engaging recess 62 receives the pressing force from the driving claw 31 to be compressively deformed. Thus, there is a time lag, after the end face 62a of the engaging recess 62 receives the pressing force from the driving claw 31 to be compressively deformed as noted above, until the edge 32a of the rib portion 32 is moved in a sufficient amount to come into contact with the inner-end face 63c of the cored bar projection 63.

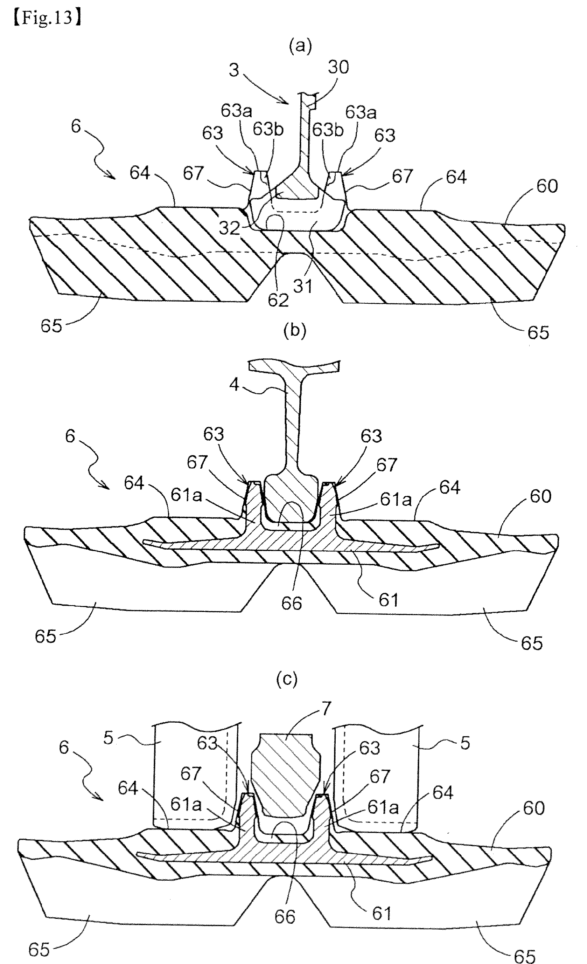

As shown in Fig. 7 and Fig. 13(a), the driving claw 31 is projected in the transverse direction (lateral direction) perpendicularly to the disk plane of the disk-shaped member 30 so that a lateral dimension of the driving claw 31 is set somewhat smaller than a length (width) of the engaging recess 62 in the belt width direction; and substantially equal to a length (width) between the right and left cored bar projections 63.

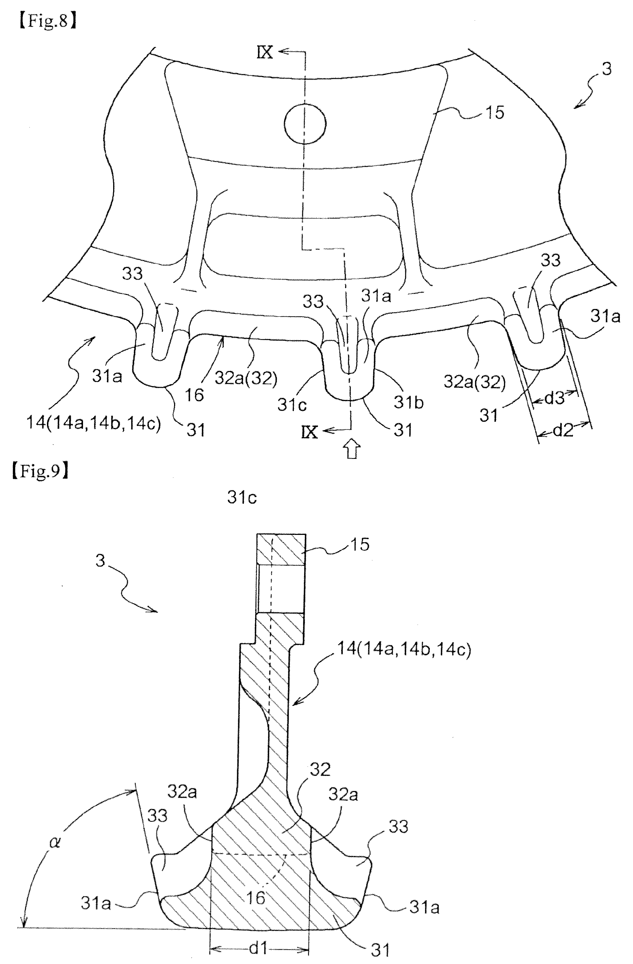

Assuming that an outer edge of the driving claw 31 is positioned on the horizontal plane as shown in Fig. 9 and Fig. 11, each of the lateral end faces 31a of the driving claw 31 is formed as an inclined surface having a predetermine claw inclination angle (α) (corresponding to an angle of inclination of the end face 31a of the driving claw 31 relative to the horizontal plane), not as a vertical surface normal to the horizontal plane.

The end faces 31a, formed as the inclined surfaces with the claw inclination angle (α), are provided at lateral opposite ends of the driving claw 31. Whereby, the end faces 31a of the driving claw 31 are formed as tapered surfaces to be narrower radially outward.

The claw inclination angle (α) is set equally to the belt inclination angle (β) for the end face 62a of the engaging recess 62 in the belt width direction.

On the other hand, a forward-facing surface 31b (side for providing a driving force to the crawler belt 6 in the vehicle forward direction) and a backward-facing surface 31c (side for providing a driving force to the crawler belt 6 in the vehicle reverse direction) positioned in front and the rear of the driving claw 31 in the circumferential direction extend generally along a normal line from the rotational center of the disk-shaped member 30. However, a circumferential width (d2) at a portion closer to the rotational center (closer to the root of the claw) is larger than a circumferential width (d3) at a portion farther away from the rotational center (closer to the tip of the claw) so that the driving claw 31 is tapered to be slightly narrower radially outward.

A partial dent portion 33 is formed on the end face 31a of the driving claw 31, thereby to reduce the overall weight of the disk-shaped member 30.

### [Retainer Guide]

Each of the retainer guides 7 has a construction as shown in Figs. 2, 12, 13(c) and 14.

More particularly, each of the retainer guides 7 is fixedly connected to the fixing bracket 21 extending continuously from the track frame 20 and to the balance-like member 23 extending continuously from a support bracket 22, whereby the front retainer guide 7 and the rear retainer guide 7 are disposed at positions associated with the front-end roller 5 and the rear-end roller 5, respectively, between the right and left cored bar projections 63 associated therewith. The front retainer guide 7 and rear retainer guide 7 have identical configuration and shape to each other.

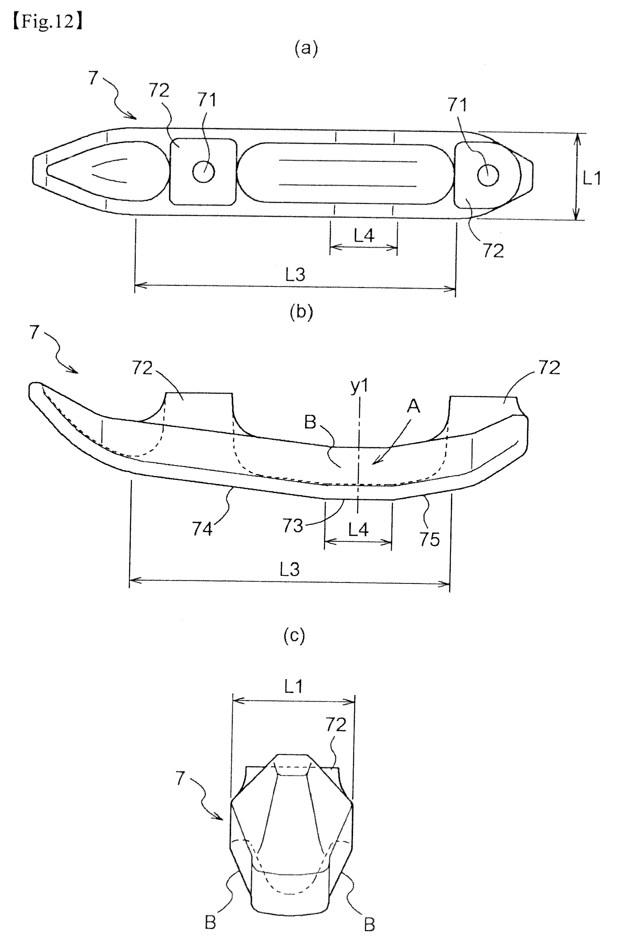

As shown in Fig. 12, each retainer guide 7 has an overall boat-shaped configuration as viewed from a lateral side. The retainer guide 7 has two, front and rear mounting portions 72, 72 having threaded holes 71, 71 defined therein to be fixedly connected to the fixing bracket 21, and the balance-like member 23 extending continuously from the support bracket 22, respectively.

When the retainer guide 7 is attached to the fixing bracket 21 or the balance-like member 23, the lower-most end position of the retainer guide 7 comes to a position intersecting a perpendicular line (y1) as shown in Figs. 2 and 12(b), extended from a rotational center p of the roller 5. When the retainer guide 7 comes to the lower-most end position, the retainer guide 7 is positioned the closest to the inner circumferential surface of the crawler belt 6 between the right and left cored bar projections 63. The retainer guide 7 has a width (L1) in the belt width direction at the position intersecting the perpendicular line (y1). The width (L1) is set larger than a width (L2) of the retainer guide 7, which width (L2) is defined across two contacting points P3 between the retainer guide 7, and upper regions of the cored bar projection 63 where a center line (center plane) (y2) of the cored bar projection 63 in the belt circumferential direction of the crawler belt 6 is present.

As shown in Fig. 12(a) and Fig. 12(b), the width (L1) of the retainer guide 7 in the belt width direction is constant over a length (L3) of a straight portion of the retainer guide 7 in the belt circumferential direction (fore-and-aft direction of the belt). At front and rear portions of the straight portion (L3), the front end and rear end of the retainer guide 7 are tapered as viewed from the top as shown in Fig. 12(a), and curved upward as viewed from the lateral side as shown in Fig. 12(b).

As shown in Fig. 12(b), the straight portion (L3) of the retainer guide 7 includes, in the vicinity of a portion thereof intersecting the perpendicular line (y1), a perpendicular lower edge range (L4) where a perpendicular lower edge portion 73 of the retainer guide 7 extending perpendicular to the perpendicular line (y1) is present. A forward lower edge portion 74 positioned forwardly of the perpendicular lower edge range (L4) in the straight portion (L3) is slightly curved forwardly upward, while a rearward lower edge portion 75 positioned rearwardly of the perpendicular lower edge range (L4) in the straight portion 3 is slightly curved rearwardly upward.

The lower edge portion of the retainer guide 7 is shaped in the above-noted manner for the following reasons. As shown in Fig. 2, when all of the rollers 5 come into contact with the flat ground, lower edges of the front-end idler wheel 4 and rear-end idler wheel 4 of the crawler device 2 are positioned higher than a lower tangent line of all of the rollers 5. This causes the crawler belt 6 to be tensioned to be slightly curved forwardly upward at the forward side of the front-end roller 5 and to be tensioned to be slightly curved rearwardly upward at the rearward side of the rear-end roller 5. Thus, it is required to maintain a necessary gap between the lower edge of the retainer guide 7 and the inner circumferential surface of the crawler belt 6.

Further, the front end side and the rear end side of the retainer guide 7 are tapered as viewed from the top because guiding action by the retainer guide 7 having the increased width (L1) in the belt width direction can be achieved smoothly as noted above. Still further, the front and rear ends of the retainer guide 7 are curved upward in addition to being tapered as viewed from the top as noted above because it is intended to prevent the front and rear upwardly-curved portions from coming into direct contact with the crawler belt 6.

With the retainer guide 7 formed as above being in a reference position as shown in Fig. 14(a) (traveling position in which all of the rollers 5 contact the roller track surface 64 and the entire crawler belt 6 receives average pressure), a relative height between a contacting surface of the roller and a lower surface of the retainer guide 7 is determined so that a sufficiently large gap (S1) is defined between a lowermost position of the retainer guide 7 and the inner circumferential surface of the crawler belt 6 (inner circumferential surface of the pressure-receiving block portion 66 in the present embodiment).

On the other hand, in the closest position as shown in Fig. 14(b) (traveling position of the crawler belt 6 when e.g. the vehicle rides on a risen part of the ground to cause an intensive up-thrusting force to be applied thereto from the underside of one/some of rollers 5), the crawler belt 6 is partially compressed or bent to cause the retainer guide 7 to relatively move close to the inner circumferential surface of the crawler belt 6.

According to the present invention, the width (L1) of the retainer guide 7 is set larger as noted above than the width (L2) extending in the belt width direction across the contacting portions P3 at the respective upper portions of the cored bar projection 63 of the crawler belt 6. Therefore, when the retainer guide 7 moves closer to the inner circumferential surface of the crawler belt 6 (inner circumferential surface of the pressure-receiving block portion 66 in the present embodiment) as shown, the contacting portion P3 on the retainer guide 7 comes into contact with the contacting portion P3 associated therewith on the upper portion of the cored bar projection 63, to avoid further approach of the former toward the latter. This secures a gap (S2) to prevent mutual contact between the retainer guide 7 and the crawler belt 6.

More particularly, the contacting portion P3 in the range of the straight portion (L3) having the width (L1) determined at the retainer guide 7 provides a close contact regulation portion (A) for preventing the lower edge of the retainer guide 7 from coming into contact with the inner circumferential surface of the crawler belt 6.

The contacting portion P3 on the upper portion of the cored bar projection 63, configured to come into contact with the contacting portion P3 on the retainer guide 7, is defined at a position spaced upward away from the contacting portion (P2) on the cored bar projection 63 as shown in Figs. 11(b) and Fig. 16 for coming into contact with the contacting portion (P2) on the lateral edge 32a of the rib portion 32 of the driving sprocket 3.

This is because to prevent the rubber material covering the outer surface of the cored bar projection 63 from coming into contact with both of the rib portion 32 of the driving sprocket 3 and the retainer guide 7 at the same position, and restrain the rubber material from being damaged or worn out early.

The close contact regulation portion (A) as described above is formed at a portion of each of lateral opposite side surfaces (B) of the retainer guide 7 tapered downward, which portion comes into contact with the contacting portion P3 on the upper portion of the cored bar projection 63. Each of the lateral opposite side surfaces (B) forms an angle of inclination sightly larger than an angle of inclination of the guide surface (C) of the cored bar projection 63.

Thus, even when the retainer guide 7 is fitted into the space between the cored bar projections 63 relatively tight, a contacting area at the close contact regulation portion (A) is relatively small, which easily avoids a situation in which the retainer guide 7 is meshed with the projections tight and hard to disengage.

### [Idler Wheel]

As shown in Fig. 2 and Fig. 13(b), the idler wheel 4 is freely rotated, fitted into the space between the right and left cored bar projections 63, 63 and contacting the inner circumferential surface of the crawler belt 6.

In this, the idler wheel 4 is rotated with its outer circumferential surface being in contact with the inner circumferential surface of the pressure-receiving block portion 66 of the crawler belt 6, which can avoid occurrence of noise at this portion.

While the lateral opposite side surfaces of the idler wheel 4 may come into contact with metal portions of the right and left cored bar projections 63, so much noise does not occur at this position even if the metal portions come into contact with each other, since the idler wheel 4 and the crawler belt 6 are rotated with hardly any relative movement in this region, which also may prevent occurrence of noise.

### [Modified Embodiment 1]

In the above description of the foregoing embodiment, the close contact regulation portion (A) is provided by setting the width (L2) to extend across the two contacting portions P3 each defined between the retainer guide 7 and the cored bar projection 63, but this arrangement is not limitative. Instead, a portion of the retainer guide 7 may be configured not to come into contact with the maximum projecting portions of the cored bar projections 63 in the reference position, while the portion comes into contact with the maximum projecting portions of the cored bar projections 63 in the closest contact position, for example. This may secure the gap (S2) also, to thereby prevent the retainer guide 7 from moving closer to the inner circumferential surface of the crawler belt 6.

### [Modified Embodiment 2]

In the above description of the foregoing embodiment, two, forward and rearward retainer guides 7 are separately provided, but this is not limitative. Instead, one and only retainer guide 7 may be provided either on the front side or rear side, or an elongated retainer guide 7 extending from the front end side to the rear end side may be provided.

### [Modified Embodiment 3]

In the foregoing embodiment, the close contact regulation portion (A) of the retainer guide 7 has the lateral opposite side surfaces (B) tapered downward forming the angle of inclination slightly larger than the angel of inclination of the guide surfaces (C) of the right and left cored bar projections 63, but this is not limitative. Instead, the angle of inclination of the lateral opposite surfaces (B) of the retainer guide 7 tapered downward may be the same as the tapered angle formed by the inclinations of the guide surfaces (C) of the right and left cored bar projections 63. With the same angle of inclination in this manner, the area around the contacting portion P3 is increased to diminish contact pressure per unit area, which advantageously reduces the degree of abrasion at the contacting portion P3.

### [Modified Embodiment 4]

In the foregoing embodiment, the claw inclination angle (α) of the driving claw 31 is determined to be the same as the belt inclination angle (β) on the end face 62a of the engaging recess 62 in the belt width direction, but this is not limitative. Instead, the claw inclination angle (α) may be larger than the belt inclination angle (β) or contrariwise.

If the claw inclination angle (α) relative to the horizontal plane is set larger than the belt inclination angle (β), the following advantages are obtained.

With such an arrangement, the angle of inclination of the tapered surface of the driving claw 31 is larger than the angle of inclination of the tapered surface of the engaging recess 62 relative to the horizontal plane. Thus, when the engaging recess 62 and the driving claw 31 start to engage with each other, the narrowed portion at the distal end of the driving claw 31 corresponds to the widened portion at the entrance of the engaging recess 62.

This is advantageous in following respects, compared with the arrangement in which the angle of inclination of the tapered surface of the engaging recess 62 and the angle of inclination of the tapered surface of the driving claw 31 relative to the horizontal plane are the same, or in which the angle inclination of the engaging recess 62 is larger than the angle of inclination of the driving claw 31. Namely, when the engaging recess 62 and the driving claw 31 start to engage with each other, the difference between the distance from the central position to the tapered surface of the engaging recess 62 in the belt width direction and the distance from the central position to the tapered surface of the driving claw 31 can be enlarged by allowing the narrowed portion at the distal end of the driving claw 31 to correspond to the widened portion at the entrance of the engaging recess 62. As a result, the distal end of the driving claw 31 may be disengaged from the entrance of the engaging recess 62 less easily to allow them to engage with each other more easily.

Further, in this arrangement, when the end face of the engaging recess 62 in the belt width direction comes into contact with the lateral end face of the driving claw 31, the contact pressure at the entrance of the engaging recess 62 is higher, while the contact pressure at the inner depth side of the engaging recess 62 is lower.

With such an arrangement, abrasion caused by the contact between the engaging recess of the crawler belt and the driving claw 31 advances more slowly at the entrance of the engaging recess 62 than on the inner depth side of the engaging recess 62. As a result, such a disadvantage can be avoided more easily that the abrasion at the entrance of the engaging recess 62 advances more quickly than on the inner depth side to thereby cause the driving claw 31 to be disengaged from the engaging recess 62 at an early stage of use.

### INDUSTRIAL APPLICABILITY OF THE INVENTION

The crawler propelling device according to the present invention may be used as a propelling device for various types of vehicles, including a combine-harvester, construction machinery and the like, other than the tractor as shown and described in the embodiment.

### DESCRIPTION OF THE REFERENCE SIGN(S)

2 crawler propelling device
3 driving sprocket
5 roller
6 crawler belt
30 disk-shaped member
31 driving claw
31a end face
32 rib portion
32a edge
60 belt main body
61 cored bar
62 engaging recess
62a end face
63 cored bar projection
63c inner-end face
64 roller track surface
a claw inclination angle (angle of inclination relative to horizontal plane)
β belt inclination angle (angle of inclination relative to horizontal plane)
d1 distance

## Claims

1. A crawler propelling device (2) comprising:
a crawler belt (6), the crawler belt including a belt main body (60) made of rubber material, cored bars (61) embedded in the belt main body at predetermined intervals in a belt circumferential direction, and a pair of right and left cored bar projections (63) protruding from intermediate portions in a belt width direction of each of the cored bars (61); and
a driving sprocket (3) for providing the crawler belt (6) with rotational power in the belt circumferential direction,
wherein the crawler belt (6) has engaging recesses (62) provided on an inner circumferential surface thereof to be engageable with driving claws (31) of the driving sprocket (3),
wherein each of the engaging recesses (62) is positioned between the cored bars (61) in the belt circumferential direction, the engaging recess being elongated greater in the belt width direction than in the belt circumferential direction, the engaging recess having end faces (62a) in the belt width direction formed as tapered surfaces to be narrower toward an inner depth side of the engaging recess,
wherein each of the driving claws (31) is elongated greater in a lateral direction than in a circumferential direction of a disk-shaped member (30),
wherein the driving claws (31) are formed on an outer circumferential side of the disk-shaped member (30), which side is fitted into a space between the right and left cored bar projections (63), to be engaged into the engaging recesses (62) formed at predetermined intervals in the belt circumferential direction, and wherein each of the driving claws (31) has end faces (31a) in the lateral direction formed as tapered surfaces to be narrower radially outward, **characterized in that** each of the tapered surfaces forming the end face (62a) of the engaging recess (62) in the belt width direction has an angle of inclination relative to a horizontal plane that is the same as an angle of inclination relative to the horizontal plane of each of the tapered surfaces forming the end face (31a) of the driving claw (31) in the lateral direction.

2. A crawler propelling device (2) comprising:
a crawler belt (6), the crawler belt including a belt main body (60) made of rubber material, cored bars (61) embedded in the belt main body at predetermined intervals in a belt circumferential direction, and a pair of right and left cored bar projections (63) protruding from intermediate portions in a belt width direction of each of the cored bars (61); and
a driving sprocket (3) for providing the crawler belt (6) with rotational power in the belt circumferential direction,
wherein the crawler belt (6) has engaging recesses (62) provided on an inner circumferential surface thereof to be engageable with driving claws (31) of the driving sprocket (3),
wherein each of the engaging recesses (62) is positioned between the cored bars (61) in the belt circumferential direction, the engaging recess being elongated greater in the belt width direction than in the belt circumferential direction, the engaging recess having end faces (62a) in the belt width direction formed as tapered surfaces to be narrower toward an inner depth side of the engaging recess,
wherein each of the driving claws (31) is elongated greater in a lateral direction than in a circumferential direction of a disk-shaped member (30),
wherein the driving claws (31) are formed on an outer circumferential side of the disk-shaped member (30), which side is fitted into a space between the right and left cored bar projections (63), to be engaged into the engaging recesses (62) formed at predetermined intervals in the belt circumferential direction, and wherein each of the driving claws (31) has end faces (31a) in the lateral direction formed as tapered surfaces to be narrower radially outward, **characterized in that**
the disk-shaped member (30) of the driving sprocket (3) has a width in the lateral direction on the outer circumferential portion fitted into a space defined between the right and left cored bar projections (63), the width being smaller than a gap defined between inner-end faces (63c) of the right and left cored bar projections (63), and
wherein the relative lateral position between the end face of the disk-shaped member (30) in the lateral direction and the driving claw (31) is determined to allow the end face (31a) of the driving claw in the lateral direction to come into contact with the end face (62a) of the engaging recess (62) and then allow the end face of the disk-shaped member (30) in the lateral direction to come into contact with the inner-end face (63c) of the cored bar projection (63).

3. The crawler propelling device (2) according to claim 1,
wherein the disk-shaped member (30) of the driving sprocket (3) has a width in the lateral direction on the outer circumferential portion fitted into a space defined between the right and left cored bar projections (63), the width being smaller than a gap defined between inner-end faces (63c) of the right and left cored bar projections (63), and
wherein the relative lateral position between the end face of the disk-shaped member (30) in the lateral direction and the driving claw (31) is determined to allow the end face (31a) of the driving claw in the lateral direction to come into contact with the end face (62a) of the engaging recess (62) and then allow the end face of the disk-shaped member (30) in the lateral direction to come into contact with the inner-end face (63c) of the cored bar projection (63).

4. The crawler propelling device (2) according to any one of claims 1 to 3, further comprising:
a plurality of rollers (5) arranged in line forwardly and rearwardly in the belt circumferential direction for coming into contact with the inner circumferential surface of the crawler belt (6); and
idler wheels (4) mounted forwardly and rearwardly of the plurality of rollers (5),
wherein the driving sprocket (3) is mounted above the rollers (5) at a fore/aft intermediate position between the foremost idler wheel and the rearmost idler wheel.

## Patentansprüche

1. Raupenantriebsvorrichtung (2), umfassend:
ein Raupenband (6), wobei das Raupenband einen Raupenhauptkörper (60), der aus Kautschukmaterial hergestellt ist, Kernstäbe (61), die in dem Bandhauptkörper in vorbestimmten Intervallen in einer Bandumfangsrichtung eingebettet sind, und ein Paar rechter und linker Kernstabvorsprünge (63) aufweist, die aus Zwischenabschnitten in einer Bandbreitenrichtung jedes der Kernstäbe (61) hervorstehen, und
ein Antriebskettenrad (3), um Bereitstellen dem Raupenband (6) Drehkraft in der Bandumfangsrichtung zu verleihen,
wobei das Raupenband (6) Eingriffsaussparungen (62) aufweist, die auf einer inneren Umfangsoberfläche davon bereitgestellt sind, um mit Antriebsgreifern (31) des Antriebskettenrades (3) in Eingriff gebracht werden zu können,
wobei jede der Eingriffsaussparungen (62) zwischen den Kernstäben (61) in der Bandumfangsrichtung angeordnet ist, wobei die Eingriffsaussparung in der Bandbreitenrichtung mehr verlängert ist als in der Bandumfangsrichtung, wobei die Eingriffsaussparung Stirnflächen (62a) in der Bandbreitenrichtung aufweist, die als verjüngte Oberflächen ausgebildet sind, die zu einer inneren Tiefenseite der Eingriffsaussparung enger sind,
wobei jeder der Antriebsgreifer (31) in einer lateralen Richtung mehr verlängert ist als in einer Umfangsrichtung eines scheibenförmigen Elements (30),
wobei die Antriebsgreifer (31) auf einer äußeren Umfangsseite des scheibenförmigen Elements (30) angeordnet sind, wobei die Seite in einen Raum zwischen den linken und rechten Kernstabvorsprüngen (63) eingepasst ist, um in die Eingriffsaussparungen (62) in Eingriff gebracht zu werden, die in vorbestimmten Intervallen in der Bandumfangsrichtung ausgebildet sind, und wobei jeder der Antriebsgreifer (31) Stirnflächen (31 a) in der lateralen Richtung aufweist, die als verjüngte Oberflächen ausgebildet sind, die radial auswärts enger sind, **dadurch gekennzeichnet, dass** jede der verjüngten Oberflächen, welche die Stirnfläche (62a) der Eingriffsaussparungen (62) bilden, in der Bandbreitenrichtung einen Neigungswinkel in Bezug auf eine horizontale Ebene hat, welcher der gleiche wie ein Neigungswinkel in Bezug auf die horizontale Ebene jeder der verjüngten Oberflächen ist, welche die Stirnfläche (31a) des Antriebsgreifers (31) in der lateralen Richtung bilden.

2. Raupenantriebsvorrichtung (2), umfassend:
ein Raupenband (6), wobei das Raupenband einen Raupenhauptkörper (60), der aus Kautschukmaterial hergestellt ist, Kernstäbe (61), die in dem Bandhauptkörper in vorbestimmten Intervallen in einer Bandumfangsrichtung eingebettet sind, und ein Paar rechter und linker Kernstabvorsprünge (63) aufweist, die aus Zwischenabschnitten in einer Bandbreitenrichtung jedes der Kernstäbe (61) hervorstehen, und
ein Antriebskettenrad (3), um dem Raupenband (6) Drehkraft in der Bandumfangsrichtung zu verleihen,
wobei das Raupenband (6) Eingriffsaussparungen (62) aufweist, die auf einer inneren Umfangsoberfläche davon bereitgestellt sind, um mit Antriebsgreifern (31) des Antriebskettenrades (3) in Eingriff gebracht werden zu können,
wobei jede der Eingriffsaussparungen (62) zwischen den Kernstäben (61) in der Bandumfangsrichtung angeordnet ist, wobei die Eingriffsaussparung in der Bandbreitenrichtung mehr verlängert ist als in der Bandumfangsrichtung, wobei die Eingriffsaussparung Stirnflächen (62a) in der Bandbreitenrichtung aufweist, die als verjüngte Oberflächen ausgebildet sind, die zu einer inneren Tiefenseite der Eingriffsaussparung enger sind,
wobei jeder der Antriebsgreifer (31) in einer lateralen Richtung mehr verlängert ist als in einer Umfangsrichtung eines scheibenförmigen Elements (30),
wobei die Antriebsgreifer (31) auf einer äußeren Umfangsseite des scheibenförmigen Elements (30) ausgebildet sind, wobei diese Seite in einen Raum zwischen den rechten und linken Kernstabvorsprüngen (63) eingepasst ist, um in den Eingriffsaussparungen (62) in Eingriff gebracht zu werden, die in vorbestimmten Intervallen in der Bandumfangsrichtung ausgebildet sind, und wobei jeder der Antriebsgreifer (31) Stirnflächen (31 a) in der lateralen Richtung aufweist, die als verjüngte Oberflächen ausgebildet sind, die radial auswärts enger sind, **dadurch gekennzeichnet, dass**
das scheibenförmige Element (30) des Antriebskettenrades (3) eine Breite in der lateralen Richtung auf dem äußeren Umfangsabschnitt aufweist, der in einen Raum eingepasst ist, der zwischen den linken und rechten Kernstabvorsprüngen (63) eingepasst ist, wobei die Breite kleiner als ein Spalt ist, der zwischen inneren Stirnflächen (63c) der rechten und linken Kernstabvorsprünge (63) definiert ist, und
wobei die relative laterale Position zwischen der Stirnfläche des scheibenförmigen Elements (30) in der lateralen Richtung und dem Antriebsgreifer (31) derart bestimmt wird, dass die Stirnfläche (31 a) des Antriebsgreifers in der lateralen Richtung mit der Stirnfläche (62a) der Eingriffsaussparung (62) in Kontakt kommen kann und danach die Stirnfläche des scheibenförmigen Elements (30) in der lateralen Richtung mit der inneren Stirnfläche (63c) des Kernstabvorsprungs (63) in Kontakt kommen kann.

3. Raupenantriebsvorrichtung (2) nach Anspruch 1,
wobei das scheibenförmige Element (30) des Antriebskettenrades (3) eine Breite in der lateralen Richtung auf dem äußeren Umfangsabschnitt aufweist, der in einen Raum eingepasst ist, der zwischen den linken und rechten Kernstabvorsprüngen (63) eingepasst ist, wobei die Breite kleiner als ein Spalt ist, der zwischen inneren Stirnflächen (63c) der rechten und linken Kernstabvorsprünge (63) definiert ist, und
wobei die relative laterale Position zwischen der Stirnfläche des scheibenförmigen Elements (30) in der lateralen Richtung und dem Antriebsgreifer (31) derart bestimmt wird, dass die Stirnfläche (31 a) des Antriebsgreifers in der lateralen Richtung mit der Stirnfläche (62a) der Eingriffsaussparung (62) in Kontakt kommen kann und danach die Stirnfläche des scheibenförmigen Elements (30) in der lateralen Richtung mit der inneren Stirnfläche (63c) des Kernstabvorsprungs (63) in Kontakt kommen kann.

4. Raupenantriebsvorrichtung (2) nach einem der Ansprüche 1 bis 3, ferner umfassend:
mehrere Rollen (5), die vorne und hinten in Reihe in der Bandumfangsrichtung angeordnet sind, um mit der inneren Umfangsoberfläche des Raupenbandes (6) in Kontakt zu kommen, und
Leiträder (4), die vorne und hinten von den mehreren Rollen (5) befestigt sind,
wobei das Antriebskettenrad (3) über den Rollen (5) an einer längs verlaufenden Zwischenposition zwischen dem vordersten Leitrad und dem hintersten Leitrad befestigt ist.

## Revendications

1. Dispositif de propulsion de chenille (2) comprenant :
une courroie de chenille (6), la courroie de chenille comprenant un corps principal de courroie (60) réalisé à partir de caoutchouc, des barres de coeur (61) incorporées dans le corps principal de courroie à intervalles prédéterminés dans une direction circonférentielle de courroie, et une paire de saillies de barre creuse droite et gauche (63) faisant saillie des parties intermédiaires dans le sens de la largeur de la courroie de chacune des barres de coeur (61) ; et
un pignon d'entraînement (3) pour fournir à la courroie de chenille (6) une puissance de rotation dans la direction circonférentielle de la courroie,
dans lequel la courroie de chenille (6) a des évidements d'engagement (62) prévus sur sa surface circonférentielle interne pour pouvoir être engagés avec des griffes d'entraînement (31) du pignon d'entraînement (3),
dans lequel chacun des évidements d'engagement (62) est positionné entre les barres de coeur (61) dans la direction circonférentielle de la courroie, l'évidement d'engagement étant davantage allongé dans le sens de la largeur de la courroie que dans la direction circonférentielle de la courroie, l'évidement d'engagement ayant des faces d'extrémité (62a) dans le sens de la largeur de la courroie formées comme des surfaces biseautées de sorte à être plus étroites vers un côté de profondeur interne de l'évidement d'engagement,
dans lequel chacune des griffes d'entraînement (31) est davantage allongée dans une direction latérale que dans une direction circonférentielle d'un élément en forme de disque (30),
dans lequel les griffes d'entraînement (31) sont formées sur un côté circonférentiel externe de l'élément en forme de disque (30), lequel côté est monté dans un espace entre les saillies de barre creuse droite et gauche (63), pour être engagées dans les évidements d'engagement (62) formés à intervalles prédéterminés dans la direction circonférentielle de la courroie, et dans lequel chacune des griffes d'entraînement (31) a des faces d'extrémité (31a) dans la direction latérale formées comme des surfaces biseautées de sorte à être plus étroites radialement vers l'extérieur, **caractérisé en ce que** chacune des surfaces biseautées formant la face d'extrémité (62a) de l'évidement d'engagement (62) dans le sens de la largeur de la courroie a un angle d'inclinaison par rapport à un plan horizontal qui est le même qu'un angle d'inclinaison par rapport au plan horizontal de chacune des surfaces biseautées formant la face d'extrémité (31a) de la griffe d'entraînement (31) dans la direction latérale.

2. Dispositif de propulsion de chenille (2) comprenant :
une courroie de chenille (6), la courroie de chenille comprenant un corps principal de courroie (60) réalisé à partir de caoutchouc, des barres de coeur (61) incorporées dans le corps principal de courroie à intervalles prédéterminés dans une direction circonférentielle de la courroie, et une paire de saillies de barre creuse droite et gauche (63) faisant saillie des parties intermédiaires dans le sens de la largeur de la courroie de chacune des barres de coeur (61) ; et
un pignon d'entraînement (3) pour fournir à la courroie de chenille (6) une puissance de rotation dans la direction circonférentielle de la courroie,
dans lequel la courroie de chenille (6) a des évidements d'engagement (62) prévus sur sa surface circonférentielle interne pour pouvoir être engagés avec des griffes d'entraînement (31) du pignon d'entraînement (3),
dans lequel chacun des évidements d'engagement (62) est positionné entre les barres de coeur (61) dans la direction circonférentielle de la courroie, l'évidement d'engagement étant davantage allongé dans le sens de la largeur de la courroie que dans la direction circonférentielle de la courroie, l'évidement d'engagement ayant des faces d'extrémité (62a) dans le sens de la largeur de la courroie, formées comme des surfaces biseautées de sorte à être plus étroites vers un côté de profondeur interne de l'évidement d'engagement,
dans lequel chacune des griffes d'entraînement (31) est davantage allongée dans une direction latérale que dans une direction circonférentielle d'un élément en forme de disque (30) ,
dans lequel les griffes d'entraînement (31) sont formées sur un côté circonférentiel externe de l'élément en forme de disque (30), lequel côté est monté dans un espace entre les saillies de barre creuse droite et gauche (63), pour être engagées dans les évidements d'engagement (62) formés à intervalles prédéterminés dans la direction circonférentielle de courroie, et dans lequel chacune des griffes d'entraînement (31) a des faces d'extrémité (31a) dans la direction latérale, formées comme des surfaces biseautées de sorte à être plus étroites radialement vers l'extérieur, **caractérisé en ce que** :
l'élément en forme de disque (30) du pignon d'entraînement (3) a une largeur dans la direction latérale sur la partie circonférentielle externe montée dans un espace défini entre les saillies de barre creuse droite et gauche (63), la largeur étant plus petite qu'un interstice défini entre les faces d'extrémité interne (63c) des saillies de barre creuse droite et gauche (63), et
dans lequel la position latérale relative entre la face d'extrémité de l'élément en forme de disque (30) dans la direction latérale et la griffe d'entraînement (31) est déterminée pour permettre à la face d'extrémité (31a) de la griffe d'entraînement dans la direction latérale de venir en contact avec la face d'extrémité (62a) de l'évidement d'engagement (62) et ensuite pour permettre à la face d'extrémité de l'élément en forme de disque (30) dans la direction latérale, de venir en contact avec la face d'extrémité interne (63c) de la saillie de barre creuse (63).

3. Dispositif de propulsion de chenille (2) selon la revendication 1,
dans lequel l'élément en forme de disque (30) du pignon d'entraînement (3) a une largeur dans la direction latérale sur la partie circonférentielle externe montée dans un espace défini entre les saillies de barre creuse droite et gauche (63), la largeur étant plus petite qu'un interstice défini entre les faces d'extrémité interne (63c) des saillies de barre creuse droite et gauche (63), et
dans lequel la position latérale relative entre la face d'extrémité de l'élément en forme de disque (30) dans la direction latérale et la griffe d'entraînement (31) est déterminée pour permettre à la face d'extrémité (31a) de la griffe d'entraînement dans la direction latérale de venir en contact avec la face d'extrémité (62a) de l'évidement d'engagement (62) et ensuite pour permettre à la face d'extrémité de l'élément en forme de disque (30) dans la direction latérale de venir en contact avec la face d'extrémité interne (63c) de la saillie de barre creuse (63).

4. Dispositif de propulsion de chenille (2) selon l'une quelconque des revendications 1 à 3, comprenant en outre :
une pluralité de rouleaux (5) agencés en ligne vers l'avant et vers l'arrière dans la direction circonférentielle de la courroie pour venir en contact avec la surface circonférentielle interne de la courroie de chenille (6) ; et
des roues de tension (4) montées vers l'avant et vers l'arrière de la pluralité de rouleaux (5),
dans lequel le pignon d'entraînement (3) est monté au-dessus des rouleaux (5) dans une position intermédiaire avant/arrière entre la roue de tension la plus en avant et la roue de tension la plus en arrière.
